# EUROPEAN PATENT SPECIFICATION

(11) **EP 4 030 137 B1**
(45) Date of publication and mention of the grant of the patent: **01.05.2024**
(21) Application number: 22151936.6
(22) Date of filing: 18.01.2022
(51) Int. Cl.: G01C 15/00

(54) **SURVEYING INSTRUMENT**
VERMESSUNGSINSTRUMENT
INSTRUMENT DE SURVEILLANCE

(30) Priority: 19.01.2021 JP 2021006161
(43) Date of publication of application: 20.07.2022
(73) Proprietor: TOPCON CORPORATION, Tokyo-to (JP)
(72) Inventor: OHTOMO, Fumio, Saitama (JP); KUMAGAI, Kaoru, Tokyo-to (JP); ISHINABE, Ikuo, Tokyo-to (JP)
(74) Representative: Louis Pöhlau Lohrentz

(56) References cited:
- CN-B- 106 017 362
- US-A1- 2009 241 359
- US-A1- 2020 096 334

## Description

### BACKGROUND OF THE INVENTION

The present invention relates to a surveying instrument having functions of a total station or a laser scanner.

As surveying instruments, there are total stations which enable the prism distance measurement or non-prism distance measurement or laser scanners which perform the distance measurement while scanning an object. In these surveying instruments, to determine a position of a surveying instrument main body, the sighting in a reference direction, or a reference point or a measuring point using a reflecting object such as a retro-reflector must be highly accurately measured. For this reason, the sighting using the telescope (narrow-angle) or the detection of the reflecting object is required.

In a general total station having a telescope, a highly-accurate rotating shaft is required. Therefore, a size and a weight of the surveying instrument main body increase. Further, in the conventional total station, for the sighting or the detection of the reflecting object, the main body itself must be directed toward an object, and the rapid measurement cannot be performed. On the other hand, since the laser scanner does not have a function for the sighting using the telescope (narrow-angle) or the detection of the reflecting object, a reference direction, a reference point, or a measuring point cannot be highly accurately measured.

US 2020/096334 discloses a surveying instrument comprising a distance measuring light emitting portion for emitting distance measuring light along a distance measuring optical axis, a light receiving portion for receiving reflected distance measuring light, a transmission signal of the distance measuring light and a light receiving of the reflected distance measuring light, a distance measurement calculation unit for measuring a distance to a measurement object and a reflection intensity of the reflected distance measurement light based on a signal, a narrow-angle imaging section for acquiring an image centered on an axis, a wavelength dispersion compensating prism disposed in a shared portion of the range-finding optical axis and the narrow-angle imaging optical axis, and an input/output end surface of the wavelength dispersion compensating prism.

### SUMMARY OF INVENTION

It is an object of the present invention to provide a surveying instrument according to claim 1 which enables rapidly performing the highly accurate measurement. Further embodiments are presented in the dependent claims.

As a result, the optical axis deflection is performed by the wavelength dispersion compensation prism, the rapid optical axis deflection is enabled performed by the small inertial force of the rotating portions, the magnification and distortions of the image can be corrected, an influence of fluctuations of the wavelength dispersion compensation prism can be removed, and the highly accurate measurement can be realized.

### BRIEF DESCRIPTION OF DRAWINGS

FIG.1 is a schematic block diagram of a surveying instrument.
FIG.2 is a side elevation view of an optical axis deflector in the surveying instrument.
FIG.3A is a perspective view of the optical axis deflector, and FIG.3B is a primary part enlarged view of wavelength dispersion compensation prisms.
FIG.4 is a graph to show a relationship of wavelengths and errors between the wavelength dispersion compensation prism in a first embodiment and a normal optical prism.
FIG.5 is an explanatory drawing to explain a relationship between deflecting directions and a synthetic deflecting direction of respective disk prisms.
FIG.6A shows a narrow-angle image with no change in magnification in a "Y" axis direction, FIG.6B shows a narrow-angle image with a change in magnification in the "Y" axis direction, and FIG.6C shows a distorted narrow-angle image with a change in magnification in a rotating direction.
FIG.7 is a graph showing angular differences "θ" of the respective disk prisms and changes in magnification in the "Y" axis direction.
FIG.8A is an explanatory drawing to show fluctuating directions of the wavelength dispersion compensation prisms, and FIG.8B is an explanatory drawing to show a change in deflecting directions due to fluctuations of the wavelength dispersion compensation prisms.
FIG.9A is an explanatory drawing to explain the end face reflections when the angular difference "Θ" = 180°, FIG.9B is an explanatory drawing to explain the end face reflections when the angular difference "Θ" = 0°, FIG.9C shows a narrow-angle image in a state of FIG.9A, and FIG.9D is an explanatory drawing to show a change in end face reflection image when the wavelength dispersion compensation prisms are rotated.
FIG.10 shows wavelength dispersion compensation prisms and narrow-angle images according to a second embodiment of the present invention, where FIG.10A is an explanatory drawing to explain the end face reflections when an angular difference "θ" = 180°, FIG.10B shows a narrow-angle image in a state of FIG.10A, and FIG.10C is an explanatory drawing to show a change in end face reflection image when the wavelength dispersion compensation prisms are rotated.

### DETAILED DESCRIPTION OF THE PREFERRED EMBODIMENTS

A description will be given below on embodiments of the present invention by referring to the attached drawings.

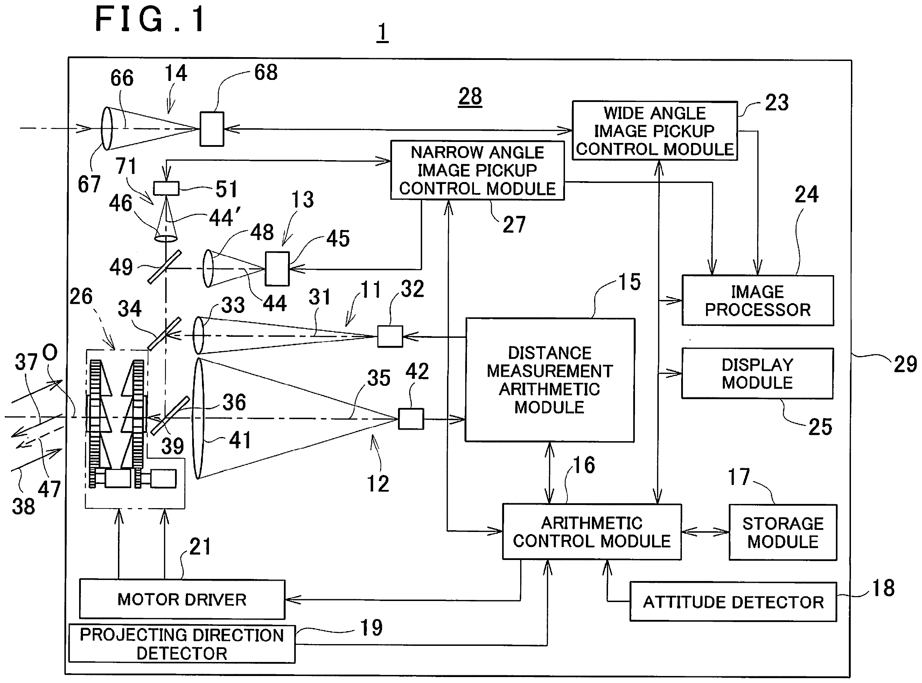

A description will be given on a surveying instrument according to a first embodiment of the present invention by referring to FIG.1 to FIG.3

A surveying instrument 1 mainly includes a distance measuring light projecting module 11, a light receiving module 12, a detecting light projecting module 13, a wide-angle image pickup module 14, a narrow-angle image pickup module 71, a distance measurement arithmetic module 15, an arithmetic control module 16, a storage module 17, an attitude detector 18, a projecting direction detector 19, a motor driver 21, a wide angle image pickup control module 23, an image processor 24, a display module 25, an optical axis deflector 26, and a narrow angle image pickup control module 27. They are accommodated and integrated in a casing 29. It is to be noted that the distance measuring light projecting module 11, the light receiving module 12, the distance measurement arithmetic module 15, the optical axis deflector 26 and the like constitute a distance measuring module 28 having functions as an electronic distance meter.

As each of the distance measurement arithmetic module 15 and the arithmetic control module 16, a CPU specialized for the present embodiment, a general-purpose CPU, an embedded CPU, a microprocessor, or the like is used. Further, as the storage module 17, a semiconductor memory such as a RAM, a ROM or a Flash ROM, a magnetic recording memory such as an HDD, or an optical recording memory such as a CDROM is used.

The storage module 17 stores various types of programs for carrying out the present embodiment, and the distance measurement arithmetic module 15 and the arithmetic control module 16 expand and execute the stored programs, respectively. Further, in the storage module 17, various types of data, for instance, the measurement data or the image data are stored.

The arithmetic control module 16 controls the optical axis deflector 26 via the motor driver 21, and controls the deflection of a distance measuring optical axis 39 (to be described later). Further, the arithmetic control module 16 performs the integration control of the distance measurement arithmetic module 15, the wide angle image pickup control module 23, and the narrow angle image pickup control module 27, and the synchronous control of the distance measurement, the imaging, the detection of a retro-reflective detecting light. Further, the arithmetic control module 16 performs the cooperative processing (to be described later) with the image processor 24, the precise deflecting direction calculation processing for the distance measuring optical axis 39 based on a detection result of the projecting direction detector 19, the vertical angle and three-dimensional coordinate calculation processing for a measuring point based on a detection result of the attitude detector 18, and the like.

The attitude detector 18 detects a tilt angle with respect to the horizontality or the verticality of the surveying instrument 1, and a detection result is input to the arithmetic control module 16. Further, as the attitude detector 18, a tilt detector such as a tilt sensor is used, and an attitude detection device disclosed in Japanese Patent Application Publication No. 2016-151423 can be used.

The distance measuring light projecting module 11 has a projecting optical axis 31, as well as a light emitter 32 and a light projecting lens 33 provided on the projecting optical axis 31. The light emitter 32 is, for instance, a laser diode (LD) which emits an infrared light or a near-infrared light as a distance measuring light 37, and the light projecting lens 33 turns the distance measuring light 37 into a parallel light flux. Further, the projecting optical axis 31 is deflected by a beam splitter 34 as a deflection optical member provided on the projecting optical axis 31 and a reflecting mirror 36 as a deflection optical member provided on a light receiving optical axis 35 so that the projecting axis 31 coincides with the light receiving optical axis 35. The reflecting mirror 36 has a shape equivalent to or slightly larger than a light flux diameter of the distance measuring light 37, and a size equivalent to wavelength dispersion compensation prisms 55 and 58 (to be described later). The reflecting mirror 36 and the wavelength dispersion compensation prisms 55 and 58 occupy a limited portion with the light receiving optical axis 35 as a center.

The beam splitter 34 is, for instance, a half-mirror or a polarization beam splitter having polarization optical characteristics. The beam splitter 34 reflects a part of the distance measuring light 37 and transmits through the remainder part. Further, the reflecting mirror 36 totally reflects the distance measuring light 37 and a detecting light 47 (to be described later).

The light emitter 32 pulse-emits a laser beam or burst-emits a laser beam. The distance measuring light projecting module 11 projects a pulsed laser beam (or a burst-emitted laser beam) emitted from the light emitter 32 as the distance measuring light 37. It is to be noted that the burst light emission is disclosed in Japanese Patent Application Publication No. 2016-161411. Further, by outputting a timing signal as a transmission signal for the distance measuring light, the distance measurement arithmetic module 15 has the distance measuring light projecting module 11 pulse-emitted or burst-emitted the distance measuring light 37.

A description will be given on the light receiving module 12. A reflected distance measuring light 38 from an object to be measured (an object) enters the light receiving module 12. The light receiving module 12 has the light receiving optical axis 35, and the projecting optical axis 31 deflected by the beam splitter 34 and the reflecting mirror 36 coincides with the light receiving optical axis 35.

It is to be noted that a state where the projecting optical axis 31 coincides with the light receiving optical axis 35 is determined as the distance measuring optical axis 39.

The optical axis deflector 26 has a disk prism (to be described later) and can deflect the distance measuring light 37 to an arbitrary direction by the rotation of the disk prism. The disk prism is, for instance, a pair of disk prisms 53 and 54 (to be described later), and the wavelength dispersion compensation prisms 55 and 58 are provided in central portions of the disk prisms 53 and 54. The optical axis deflector 26 is arranged on a deflection reference optical axis "O". Further, the optical axis deflector 26 is configured in such a manner that incidence end faces and projection end faces of the wavelength dispersion compensation prisms 55 and 58 become vertical with respect to the deflection reference optical axis "O" and the deflection reference optical axis "O" passes near a rotating shaft 52 (to be described later) of the optical axis deflector 26. It is to be noted that the incidence end faces and the projection end faces are also referred to as incidence/projection end faces altogether.

As will be described later, the deflection reference optical axis "O" is an optical axis serving as a reference for the optical axis deflector 26 and has predetermined relationships with all optical axes in the surveying instrument 1 (known interaxial distances and angular relationships). Here, all optical axes refer to the distance measuring optical axis 39, a detecting light optical axis 44 (to be described later), a wide-angle image pickup optical axis 66 (to be described later), and a narrow-angle image pickup optical axis 44' (to be described later).

A focusing lens 41 is arranged on the light receiving optical axis 35 having passed through the optical axis deflector 26. Further, on the light receiving optical axis 35, a photodetector 42 is provided. The photodetector 42 is, for instance, an avalanche photodiode (APD) or an equivalent photoelectric conversion element.

The focusing lens 41 forms an image of the reflected distance measuring light 38 on the photodetector 42. The focusing lens 41, the photodetector 42 and the like constitute the light receiving module 12.

The photodetector 42 receives the reflected distance measuring light 38, and emits a light reception signal. The light reception signal is input to the distance measurement arithmetic module 15. The distance measurement arithmetic module 15 performs the distance measurement to the object (the optical wave distance measurement) and the measurement of the reflection intensity based on a transmission signal and the light reception signal of the distance measuring light 37. As signals for the distance measuring light 37 and the reflected distance measuring light 38, it is possible to use various types of signals, for instance, a light emission timing signal for the distance measuring light 37 and a light reception timing signal for the reflected distance measuring light 38, or a phase signal for the distance measuring light 37 and a phase signal for the reflected distance measuring light 38 (a phase difference signal).

It is to be noted that, as the measurement, a prism survey in a case where the object has the retroreflective ability, or a non-prism survey in a case where the object has no retroreflective ability is performed. In the following description, the object is a reflecting object such as a prism or a corner cube, and the prism survey with the retroreflective ability will be described.

A description will be given on the detecting light projecting module 13 which irradiates the detecting light 47. Further, the detecting light projecting module 13 has the detecting light optical axis 44, as well as a detecting light source 45, a detecting light lens 48, and a split mirror 49 which are arranged on the detecting light optical axis 44. The detecting light 47 is projected from the detecting light source 45 along the detecting light optical axis 44. The detecting light 47 is deflected by the split mirror 49 along the detecting light optical axis 44 and coincides with light projecting optical axis 31. Therefore, the detecting light 47 is irradiated coaxially with the distance measuring light 37.

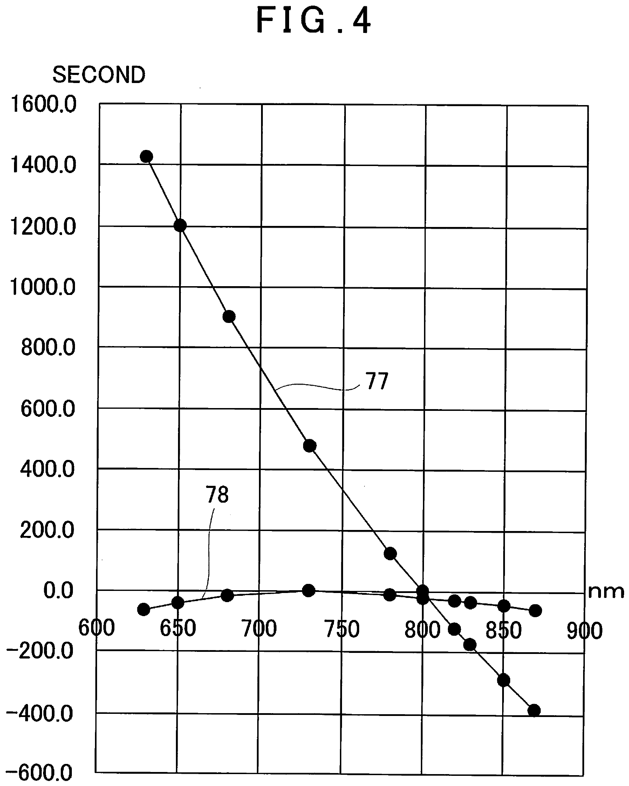

Here, a spread angle of the detecting light 47 irradiated from the detecting light projecting module 13 is determined depending on a focal distance of the detecting light lens 48 and a size of the detecting light source 45. As the spread angle of the detecting light 47, a spread angle of approximately 1° to 2° is usually selected in accordance with requirements of a distance and an angular range of the reflecting object to be detected. Further, a wavelength of the detecting light 47 is selected so that an error due to a wavelength difference from the distance measuring light 37 (see FIG.4) is sufficiently smaller than the spread angle.

It is to be noted that, as the detecting light source 45, an emission light source such as an LED (a light-emitting diode) or an LD is used. Since the optical axis deflector 26 uses the wavelength dispersion compensation prisms 55 and 58, the wavelength of the detecting light 47 can be selected from a wavelength band of a red light to a near-infrared light, for instance, a range of 650 nm to 850 nm. For instance, a light of 850 nm is selected as the distance measuring light 37, and a light of 650 nm is selected as the detecting light 47. Here, if a visible light (a red color) is used as the detecting light 47, a worker can visually confirm the detecting light 47 on the reflecting object (the object) side, and positioning the object can be made efficient. Further, as the detecting light source 45, a light beam emitted from the LED or the LD may be led through an optical fiber so that a projection end face of the optical fiber can be adopted as the detecting light source.

The detecting light 47 reflected by the object enters the optical axis deflector 26 coaxially with the reflected distance measuring light 38, and the detecting light 47 and the reflected distance measuring light 38 are transmitted through the optical axis deflector 26 and then reflected by the reflecting mirror 36.

The reflecting mirror 36 separates the narrow-angle image pickup optical axis 44' from the distance measuring optical axis 39, and deflects the narrow-angle image pickup optical axis 44'. The beam splitter 34, the detecting light split mirror 49, the focusing lens 46 and a narrow-angle image pickup element 51 are arranged on the deflected narrow-angle image pickup optical axis 44'.

The distance measuring optical axis 39 is partially shared with the narrow-angle image pickup optical axis 44'. The detecting light split mirror 49, the beam splitter 34, the focusing lens 46, the narrow-angle image pickup element 51, and the like function as a narrow-angle image pickup module 71 which acquires an image of a measuring point portion irradiated with the distance measuring light 37. The narrow-angle image pickup module 71 acquires a narrow-angle image in a predetermined image positional relationship (for instance, an image center) with reference to the distance measuring optical axis 39. It is to be noted that a field angle of the narrow-angle image pickup module 71 is, for instance, approximately ±2° to ±3°, which is narrower than a field angle of the wide-angle image pickup module 14 (for instance, a deflection angle ±30°), images with high magnifications are acquired.

The narrow-angle image pickup element 51 images the detecting light 47 and the reflected distance measuring light 38 reflected by the retroreflective ability of the object as a part of a narrow-angle image together with the object and the background light. Further, the narrow-angle image pickup element 51 is configured to also image the detecting light 47 and the distance measuring light 37 reflected by the end face reflection and transmitted through the beam splitter 34 and the detecting light split mirror 49, and the acquired image data is input to the narrow angle image pickup control module 27.

The narrow-angle image pickup element 51 is a CCD or a CMOS sensor which is an aggregation of pixels, and a position of each pixel on the narrow-angle image pickup element 51 can be identified. For instance, each pixel has pixel coordinates in a coordinate system with the narrow-angle image pickup optical axis 44' as an origin, and its position on the narrow-angle image pickup element 51 can be identified by the pixel coordinates. An image signal output from the narrow-angle image pickup element 51 has the pixel coordinate information and the image signal is input to the narrow angle image pickup control module 27.

The narrow angle image pickup control module 27 can perform the timing control to turn on or off the detecting light source 45 so that a reflection image of the detecting light 47 and a reflection image of the reflected distance measuring light 38 in a narrow-angle image can be accurately detected. Further, some of functions of the arithmetic control module 16 may be allocated to the narrow angle image pickup control module 27.

A light transmitted through the wavelength dispersion compensation prisms 55 and 58 (a part of a reflected detecting light and the reflected distance measuring light 38) can solely enter the narrow-angle image pickup element 51 so that an object reflection image (a reflection image of the distance measuring light 37 and the detecting light 47 reflected by the object) can be acquired. Further, the narrow-angle image pickup element 51 can also detect an end face reflection image of the detecting light source 45 or the light emitter 32 by the end face reflection of the wavelength dispersion compensation prisms 55 and 58.

As described above, the detecting light projecting module 13, the focusing lens 46, the narrow-angle image pickup element 51 and the like acquire an image of a predetermined range in an irradiating direction of the distance measuring light 37 with the distance measuring optical axis 39 as a center.

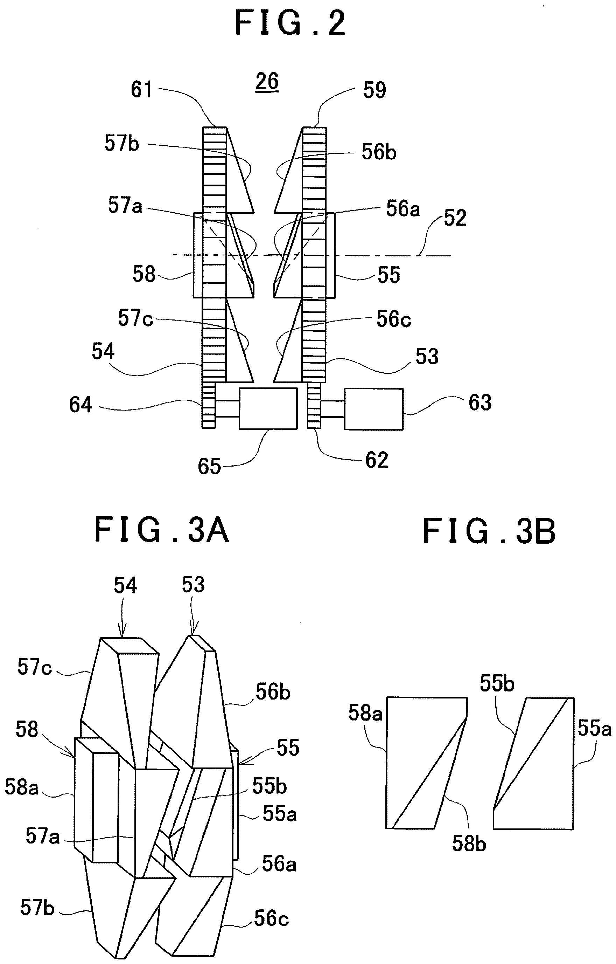

A description will be given on particulars of the optical axis deflector 26 by referring to FIG.2, FIG.3A, FIG.3B, and FIG.4.

The optical axis deflector 26 is included of the pair of disk prisms 53 and 54 and motors 63 and 65 which rotate and drive the disk prisms 53 and 54. The disk prisms 53 and 54 have the same shape which is a polygon with a circumscribed circle, respectively, and the disk prisms 53 and 54 have a common rotating shaft 52. Further, the disk prisms 53 and 54 are concentrically oppositely arranged while becoming orthogonal to the rotating shaft 52, and arranged in parallel at a predetermined interval. Further, the rotating shaft 52 and the deflection reference optical axis "O" are parallel or substantially parallel. The disk prism 53 is molded with the use of the optical glass, and has a plurality of prism columns arranged in parallel as a basic configuration and a wavelength dispersion compensation prism 55 arranged in a central portion. The wavelength dispersion compensation prism 55 is a composite prism formed by attaching an optical prism 55a and an optical prism 55b to each other. It is to be noted that, in the drawing, the disk prism 53 has three prism columns (for instance, rod-shaped triangular prisms, hereinafter they will be referred to as triangular prisms) 56a, 56b, 56c.

Likewise, the disk prism 54 is molded with the use of the optical glass, has three prism columns (for instance, rod-shaped triangular prisms, hereinafter they will be referred to as triangular prisms) 57a, 57b, 57c arranged in parallel as a basic configuration, and has a wavelength dispersion compensation prism 58 arranged in a central portion. The wavelength dispersion compensation prism 58 is a composite prism formed by attaching an optical prism 58a and an optical prism 58b to each other. It is to be noted that the triangular prisms 56a, 56b, 56c and the triangular prisms 57a, 57b, 57c all have optical deflection characteristics of the same deflection angle. Further, the wavelength dispersion compensation prisms 55 and 58 are produced in such a manner that optical deflection characteristics of the wavelength dispersion compensation prisms 55 and 58 become the same as the optical deflection characteristics of the triangular prisms 56a, 56b, 56c and the triangular prisms 57a, 57b, 57c.

The wavelength dispersion compensation prism 55 and the wavelength dispersion compensation prism 58 have the same configuration and are point-symmetrically arranged. It is to be noted that an incidence end face of the wavelength dispersion compensation prism 55 and a projection end face of the wavelength dispersion compensation prism 58 orthogonal to the rotating shaft 52 are determined as reference surfaces of the wavelength dispersion compensation prisms 55 and 58. If the incidence end face and the projection end face are truly vertical with respect to the rotating shaft 52 and there is no fluctuation such as an axial deviation of the rotating shaft 52 or a face fall over error to the rotating shaft 52, a normal line 56 (parallel to the rotating shaft 52) running through the center or the substantial center of each of the incidence end face and the projection end face is determined as a deflection optical axis "O" serving as a reference axial of the optical axis deflector 26. Further, the size of each of the wavelength dispersion compensation prisms 55 and 58 (lengths of the triangular prisms 56a, 57a in a longitudinal direction and a width direction) is larger than a beam diameter of the distance measuring light 37.

The wavelength dispersion compensation prism 55 and 58 are a distance measuring light deflector which is a first optical axis deflector through which the distance measuring light 37 is transmitted and from which the distance measuring light 37 is projected. Further, portions excluding the wavelength dispersion compensation prisms 55 and 58 (both end portions of the triangular prisms 56a, 57a, the triangular prisms 56b, 56c, and the triangular prisms 57b, 57c) are a reflected distance measuring light deflector which is a second optical axis deflector through which the reflected distance measuring light 38 is transmitted and which the reflected distance measuring light 38 enters.

The disk prisms 53 and 54 are independently arranged so that they can individually rotate around the rotating shaft 52, respectively. By independently controlling rotating directions, rotation amounts, and rotation speeds, the disk prisms 53 and 54 causes deflecting the projecting optical axis 31 of the distance measuring light 37 as projected to an arbitrary direction, and a scan can be performed in an arbitrary pattern. Further, disk prisms 53 and 54 deflect the light receiving optical axis 35 of the reflected distance measuring light 38 as received in parallel with the projecting optical axis 31.

An outer shape of each of the disk prisms 53 and 54 is a polygon with a circumscribed circle with the deflection reference optical axis "O" as a center, the spread of the reflected distance measuring light 38 is taken into consideration, and sizes of the disk prisms 53 and 54 are set so that a sufficient light amount can be acquired.

A ring gear 59 is fitted on an outer periphery of the disk prism 53, and a ring gear 61 is fitted on an outer periphery of the disk prism 54.

A driving gear 62 meshes with the ring gear 59, and the driving gear 62 is fixed to an output shaft of a motor 63. Similarly, a driving gear 64 meshes with the ring gear 61, and the driving gear 64 is fixed to an output shaft of a motor 65. The motors 63 and 65 are electrically connected with the motor driver 21, respectively.

As the motors 63 and 65, motors which can detect rotation angles are used. Alternatively, as the motors 63 and 65, motors which rotating in correspondence with driving input values, for instance, pulse motors are used. Alternatively, rotation angle detectors which detect rotation amounts (rotation angles) of the motors, for instance, encoders may be used for detecting rotation amounts of the motors 63 and 65.

As shown in FIG.3B, the wavelength dispersion compensation prism 55 is constituted by attaching the two optical prisms 55a, 55b having different wavelength characteristics (dispersion amounts, refraction indexes). The wavelength dispersion compensation prism 58 is similarly constituted by attaching the two optical prisms 58a, 58b having different wavelength characteristics.

FIG.4 is a graph to show an error example with respect to wavelengths of lights, for instance, the reflected distance measuring light and the reflected detecting light in a case where the distance measuring optical axis 39 and the detecting light optical axis 44 have a deflection angle of ± 30°. In FIG.4, a reference numeral 77 denotes a graph to show an error when normal prisms (triangular prisms) are used, and a reference numeral 78 denotes a graph to show an error when the wavelength dispersion compensation prisms 55 and 58 are used.

As shown in FIG.4, errors due to wavelengths in a wavelength band of 650 nm to 850 nm are reduced as characteristics of the wavelength dispersion compensation prisms 55 and 58. Therefore, since a light amount can be increased, a less-blurred fine image can be acquired, and the precise sighting and image tracking is enabled.

The wide-angle image pickup module 14 has a wide-angle image pickup optical axis 66, which is parallel to the deflection reference optical axis "O" of the surveying instrument 1. Further, the wide-angle image pickup module 14 has an image pickup lens 67 and a wide-angle image pickup element 68 which are arranged on the wide-angle image pickup optical axis 66. The wide-angle image pickup module 14 has a field angle which is equivalent or substantially equivalent to a maximum deflection range (for instance, a deflection angle ±30°) provided by the optical axis deflector 26, and the wide-angle image pickup module 14 acquires the image data including the maximum deflection range.

The wide-angle image pickup element 68 is a CCD or a CMOS sensor which is an aggregation of pixels, and a position of each pixel on the wide-angle image pickup element 68 can be identified. An image signal output from the wide-angle image pickup element 68 has the positional information, the image signal is input to the wide angle image pickup control module 23.

Therefore, a direction of an object (a measuring point) included in a wide-angle image acquired by the wide-angle image pickup module 14 can be immediately recognized on the wide-angle image with the use of pixel coordinates of the wide-angle image. Further, since the wide-angle image pickup optical axis 66 of the wide-angle image pickup module 14 and the narrow-angle image pickup optical axis 44' have a known positional relationship, a wide-angle image acquired by the wide-angle image pickup module 14 can be easily associated with a narrow-angle image 73 (to be described later) acquired by the narrow-angle image pickup module 71. That is, a direction of the narrow-angle image 73 can be easily confirmed based on the wide-angle image.

The distance measurement arithmetic module 15 controls the light emitter 32 so that the light emitter 32 pulse-emits or burst-emits (intermittently emits) a laser beam as the distance measuring light 37. The projecting optical axis 31 is deflected by the wavelength dispersion compensation prisms 55 and 58 (the distance measuring light deflector) so that the distance measuring light 37 is directed to an object specified based on the wide-angle image or the narrow-angle image 73. Thereby, the distance measuring optical axis 39 sights the object.

The reflected distance measuring light 38 reflected by the object enters via the triangular prisms 56a, 56b, 56c, the triangular prisms 57a, 57b, 57c (the reflected distance measuring light deflector), and the focusing lens 41, and the reflected distance measuring light 38 is received by the photodetector 42. Further, in the reflected distance measuring light 38, the reflected distance measuring light 38 transmitted through the wavelength dispersion compensation prisms 55 and 58 is reflected by the reflecting mirror 36, and enters the narrow-angle image pickup element 51 via the focusing lens 46.

It is to be noted that, if the object is a prism (the prism measurement), the reflected distance measuring light 38 retro-reflected by the prism is received by the photodetector 42. Further, if the object is not a prism (the non-prism measurement), the reflected distance measuring light 38 naturally reflected by the object is received by the photodetector 42. The photodetector 42 transmits a light reception signal to the distance measurement arithmetic module 15. The distance measurement arithmetic module 15 performs the distance measurement of a measuring point (a point irradiated with the distance measuring light) in accordance with each pulsed light based on the light reception signal from the photodetector 42. The distance measurement data is stored in the storage module 17.

The projecting direction detector 19 counts driving pulses input to the motors 63 and 65, and detects rotation angles of the motors 63 and 65. Alternatively, based on signals from the encoders, the projecting direction detector 19 detects the rotation angles of the motors 63 and 65, and calculates a deflection angle of the distance measuring light 37 with reference to the deflection reference optical axis "O".

The wide angle image pickup control module 23 controls the imaging of the wide-angle image pickup module 14. The wide angle image pickup control module 23 synchronizes a timing for acquiring images (a still image and a video image) by the wide-angle image pickup module 14 with a timing for performing the distance measurement using the surveying instrument 1. Further, in a case of acquiring images by the narrow-angle image pickup module 71, the timing for acquiring images by the narrow-angle image pickup module 71 is synchronized with the timing for the distance measurement.

The image processor 24 is configured to process the wide-angle image and the narrow-angle image 73 in cooperation with the arithmetic control module 16. For the image data acquired by the wide-angle image pickup module 14 and the narrow-angle image pickup module 71, the image processor 24 extracts a retro-reflected object reflection image and end face reflection images of the wavelength dispersion compensation prisms 55 and 58 from images. That is, the image processor 24 also functions as an extracting means for extracting end face reflection images of the wavelength dispersion compensation prisms 55 and 58 from the narrow-angle image 73. It is to be noted that whether an extracted reflection image is an image reflected by the object or an image reflected on the end face of one of the wavelength dispersion compensation prisms 55 and 58 can be determined with the use of, for instance, the light reflection intensity with respect to the narrow-angle image pickup module 71.

Further, the image processor 24 performs the correction processing for magnifications or distortions corresponding to an angular difference "Θ" of a synthetic deflection "C" and a rotation "ω", as well as the feature point extraction, the edge extraction processing in images, the image matching processing, and the like. Here, the angular difference "Θ" represents a relative rotation angle between the disk prisms 53 and 54, and the rotation "ω" represents a rotation angle when the disk prism 53 and 54 are integrally rotated.

Further, the image processor 24 calculates a positional deviation a center of the narrow-angle image 73 and the object reflection image in the narrow-angle image 73, and outputs the positional deviation to the arithmetic control module 16. The arithmetic control module 16 controls the optical axis deflector 26 based on a positional deviation in such a manner that the center of the narrow-angle image 73 coincides with the object reflection image, the arithmetic control module 16 enables tracking the object.

The display module 25 displays a wide-angle image acquired by the wide-angle image pickup module 14 and the narrow-angle image 73 acquired by the narrow-angle image pickup module 71. As a method for displaying the wide-angle image and the narrow-angle image 73, the display is performed using split screens. Alternatively, the wide-angle image and the narrow-angle image 73 are changed over and displayed, for instance. Further, the wide-angle image or the narrow-angle image 73 can be displayed with a scan locus superimposed.

A deflecting operation and a scan operation of the optical axis deflector 26 will now be described by referring to FIG.2, FIG.3 and FIG.5.

FIG.2 shows a state where the triangular prisms 56a, 56b, 56c and the triangular prisms 57a, 57b, 57c are placed in the same direction, and a maximum deflection angle (for instance, ±30°) can be acquired in this state. Further, FIG.3A shows a state where any one of the disk prisms 53 and 54 is at a position rotated 180°. In this state, mutual optical operations of the disk prisms 53 and 54 are offset, and a minimum deflection angle (0°) is acquired.

The distance measuring light 37 is emitted from the light emitter 32. The distance measuring light 37 is turned to a parallel light flux by the light projecting lens 33, transmitted through the distance measuring light deflector (the wavelength dispersion compensation prisms 55 and 58), and projected toward the object. Here, by being transmitted through the distance measuring light deflector, the distance measuring light 37 is deflected in a necessary direction by the wavelength dispersion compensation prisms 55 and 58.

The reflected distance measuring light 38 reflected by the object is transmitted through the reflected distance measuring light deflector, enters, and condensed on the photodetector 42 by the focusing lens 41.

When the reflected distance measuring light 38 is transmitted through the reflected distance measuring light deflector, an optical axis of the reflected distance measuring light 38 is deflected by the triangular prisms 56a, 56b, 56c and the triangular prisms 57a, 57b, 57c so that the optical axis of the reflected distance measuring light 38 coincides with the light receiving optical axis 35.

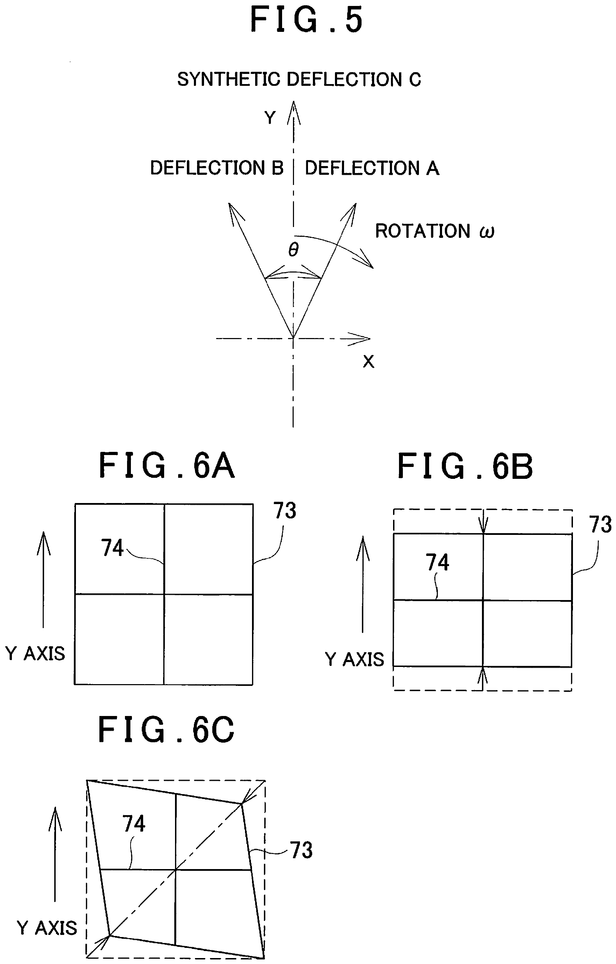

FIG.5 shows a case where the disk prism 53 and the disk prism 54 are relatively rotated. By assuming that a deflecting direction of an optical axis deflected by the disk prism 53 is a deflection "A" and a deflecting direction deflected by the disk prism 54 is a deflection "B", the deflections of the optical axis provided by the disk prisms 53 and 54 become a synthetic deflection "C" as an angular difference "Θ" between the disk prisms 53 and 54. It is to be noted that, in the present embodiment, the arrangement of the disk prisms 53 and 54 shown in FIG.2 (the arrangement realizing a maximum deflection angle) has the angular difference "Θ" = 0°.

Since the narrow-angle image pickup module 71 acquires an image of an irradiation point of the distance measuring light 37, the narrow-angle image pickup module 71 functions as a finder for a distance measurement portion. Further, since an image acquired by the narrow-angle image pickup module 71 is acquired by the reflected distance measuring light 38 transmitted through the wavelength dispersion compensation prisms 55 and 58, the dispersion of the wavelength is compensated, and a less-blurred fine image is acquired.

Here, in a case where a "y" axis direction of the narrow-angle image 73 acquired by the narrow-angle image pickup module 71 coincides with a synthetic deflection "C" direction (when the rotation "ω" = 0), a magnification in the "Y" axis direction changes in correspondence with the magnitude of the angular difference "Θ" between the disk prism 53 and the disk prism 54.

FIG.6A to FIG.6C show a relationship between the narrow-angle image 73 and the synthetic deflection "C". It is to be noted that FIG.6A shows a case where the magnification in the "Y" axis direction of the narrow-angle image 73 is not changed when directions of the deflection "A" and the deflection "B" are reversed and cancelled out each other and the synthetic deflection "C" = "A" + "B" = 0 (the angular difference "Θ" = 180°) is achieved. FIG.6B shows a case where the magnification in the "Y" axis direction of the narrow-angle image 73 changes and shrinks in the "Y" axis direction when the synthetic deflection "C" = "A" + "B" (the angular difference "Θ" = 0°) is achieved. FIG.6C shows a case where the synthetic deflection "C" = "A" + "B" (the angular difference "Θ" = 0°) is achieved and the deflecting direction has rotated 45° with respect to the "Y" axis direction (the rotation "ω" = 45°). In this case, the narrow-angle image 73 is reduced (distorted) in a direction of the 45° rotation.

Further, FIG.6A to FIG.6C show a case where a center of the narrow-angle image 73 (an intersection of cross-hairs 74 in the drawings) is arranged so that the narrow-angle image 73 coincides with the deflection reference optical axis "O". The center of the narrow-angle image 73 at this time is a projecting direction when a projected light projected along the deflection reference optical axis "O" is deflected by the optical axis deflector 26.

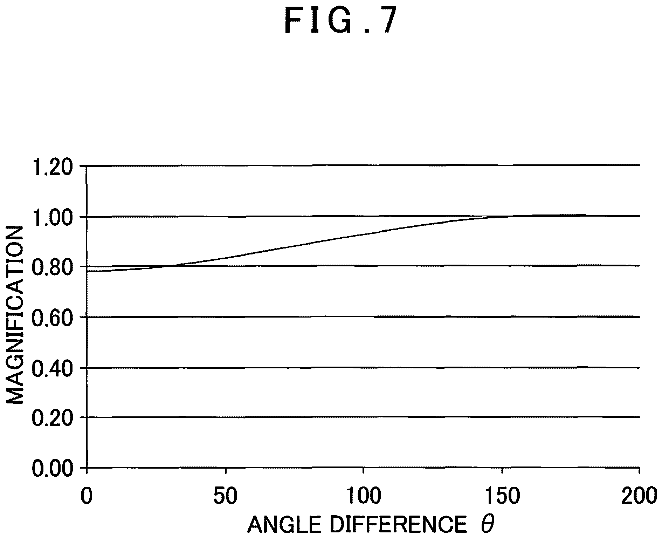

Further, FIG.7 is a graph to show a relationship between the angular difference "Θ" between the disk prism 53 and the disk prism 54 and a change in magnification in the "Y" axis direction when the "Y" axis direction of the narrow-angle image 73 has been arranged so that the narrow-angle image 73 coincides with the synthetic deflection "C" (when the entire rotation angle "ω" = 0). As shown in FIG.7, the magnification in the "Y" axis direction of the narrow-angle image 73 changes in correspondence with the magnitude of the synthetic deflection "C" provided by the angular difference "Θ". The relationship between the angular difference "θ" and the magnification in the "Y" axis direction can be calculated with the use of a wavelength dispersion compensation prism constant (a refraction index, a prism angle, and the like), the synthetic deflection "C", and the rotation ω, and can be known in advance by, for instance, performing the actual measurement. Therefore, the angular difference "Θ" (see FIG.5) can be acquired based on a detection result of the projecting direction detector 19, the magnification can be corrected, and the narrow-angle image 73 can be restored to its original image. It is to be noted that a reference angle of the angular difference "Θ" between the disk prism 53 and the disk prism 54 can be arbitrarily set, and the reference angle can be, for instance, 0° (a large change in magnification) or 180° (no change in magnification due to the cancelling of the optical operation).

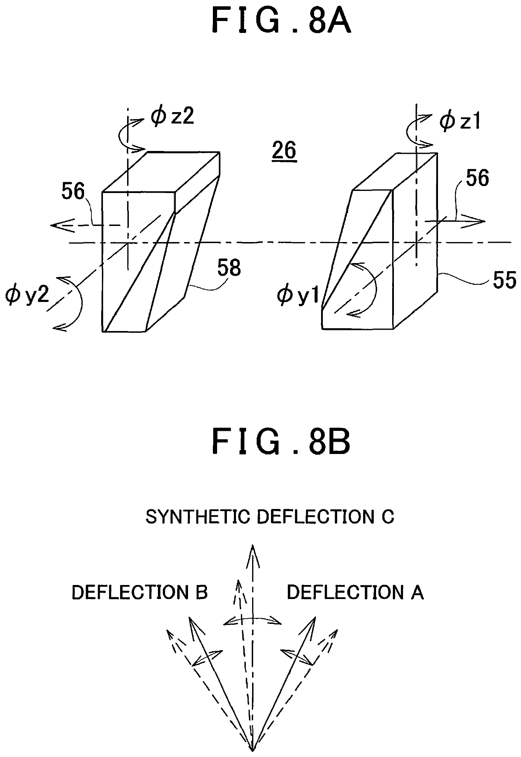

Here, if the deflection "A" and the deflection "B" have a fluctuation or a face tangle error, the synthetic deflection "C" changes in correspondence with the fluctuation. FIG.8A and FIG.8B are views emphatically to show an influence of an end face fluctuation of the optical axis deflector 26.

A deflecting direction provided by the optical axis deflector 26 is determined based on the incidence end face of the wavelength dispersion compensation prism 55 and the projection end face of the wavelength dispersion compensation prism 58 as reference surfaces. Further, the normal line 56 of the reference surfaces coincides or substantially coincides with the rotating shaft 52.

As shown in FIG.8A, when the wavelength dispersion compensation prism 55 fluctuates φz1 around the longitudinal axis and φy1 around the lateral axis and the wavelength dispersion compensation prism 58 fluctuates φz2 around the longitudinal axis and φy2 around the lateral axis, the deflection "A" and the deflection "B" fluctuate and the synthetic deflection "C" fluctuates as shown in FIG 8B. The fluctuations of φy1 and φy2 mainly cause changes in magnitude components of the deflections "A" and "B", and the fluctuations of φz1 and φz2 mainly cause changes in rotation components of the deflections "A" and "B".

The fluctuations of the deflections "A" and "B" with respect to the fluctuations of the wavelength dispersion compensation prisms 55 and 58 are determined by a wavelength dispersion compensation constant (a refraction index, a prism angle, and the like) and an incidence angle of a light beam, and the fluctuations of the deflections "A" and "B" can be calculated by the arithmetic control module 16. Further, optical characteristics of the wavelength dispersion compensation prisms 55 and 58 provided by the measurement can be also acquired.

Therefore, the deflection of the synthetic deflection "C" can be accurately calculated by calculating a fluctuation of the incidence end face of the wavelength dispersion compensation prism 55 and a fluctuation of the projection end face of the wavelength dispersion compensation prism 58 with respect to the rotating shaft 52 of the optical axis deflector 26.

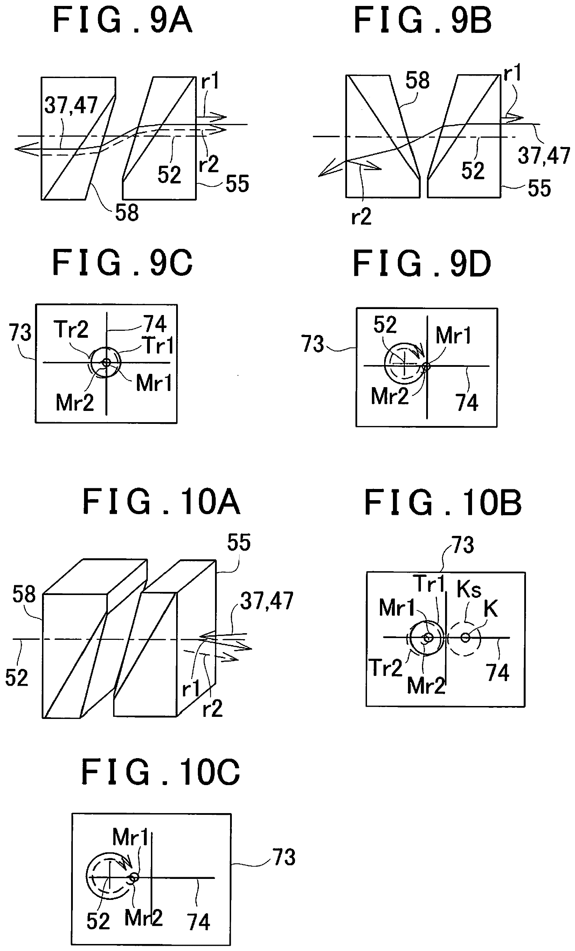

By referring to FIG.9A to FIG.9D, particulars of the detection of the fluctuation of the incidence end face of the wavelength dispersion compensation prism 55 and the fluctuation of the projection end face of the wavelength dispersion compensation prism 58 will now be described.

In the present embodiment, the fluctuation of the incidence end face of the wavelength dispersion compensation prism 55 and the fluctuation of the projection end face of the wavelength dispersion compensation prism 58 are obtained with the use of the narrow-angle image 73 for the image tracking.

FIG.9A to FIG.9D are views showing a relationship between the end face reflection of the wavelength dispersion compensation prisms 55 and 58 and the narrow-angle image 73. FIG.9A shows a reflected light r1 of the incidence end face and a reflected light r2 of the projection end face with respect to a projecting light in a case where the angular difference "θ" is 180° (a magnification: 1). FIG.9B shows the reflected light r1 of the incidence end face and the reflected light r2 of the projection end face with respect to the projecting light in a case where the angular difference "Θ" is 0°. Further, FIG.9C shows the narrow-angle image 73 in a case where the angular difference "Θ" is 180°. It is to be noted that, in FIG.9C and FIG.9D, a background image is not shown. It is to be noted that, in FIG.9C and FIG.9D, reflected lights of a detecting light "T" and a distance measuring light "M" on the incidence end face are Tr1 and Mr1, and reflected lights of the detecting light "T" and the distance measuring light "M" on the projection end face are Tr2 and Mr2, respectively. Further, although not shown, in the narrow-angle image 73 when the angular difference "Θ" = 0° (in case of FIG.9B), the projection end face reflected images Mr2 and Tr2 are not shown in the narrow-angle image 73 because the projection end face reflected images Mr2, Tr2 are far outside a field angle (a field of view) of the narrow-angle image 73.

In FIG.9C, the intersection of the cross-hairs 74 is an image position of the deflection reference optical axis O on the end faces of the wavelength dispersion compensation prisms 55 and 58. Mr1 denotes an incidence end face reflection image of the distance measuring light 37 (see FIG.1), Tr1 denotes an incidence end face reflection image of the detecting light 47 (see FIG.1), Mr2 denotes a projection end face reflection image of the distance measuring light 37, and Tr2 denotes a projection end face reflection image of the detecting light 47. Further, since the detecting light 47 has a spread angle larger than a spread angle of the distance measuring light 37, the end face reflection images Tr1 and Tr2 of the detecting light 47 are larger than the end face reflection images Mr1 and Mr2 of the distance measuring light 37.

FIG.9D shows the narrow-angle image 73 in a case where the wavelength dispersion compensation prisms 55 and 58 are integrally rotated (the rotation ω) in a state where the angular difference "Θ" of the wavelength dispersion compensation prisms 55 and 58 = 180° is maintained, that is, a state where both the incidence end face reflection images Mr1, Tr1 and the projection end face reflection images Mr2, Tr2 can be acquired within the field of view of the narrow-angle image 73. It is to be noted that, in FIG.9D, the incidence end face reflection image Tr1 and the projection end face reflection image Tr2 are not shown.

The detection of a fluctuation in the wavelength dispersion compensation prism 55 can be acquired based on a change in the incidence end face reflection image Mr1 in the narrow-angle image 73 when the wavelength dispersion compensation prism 55 is solely rotated. That is, the incidence end face reflection image Mr1 draws a circular locus around the rotating shaft 52 at a predetermined position and a predetermined size in the narrow-angle image 73 in correspondence with the magnitude of a fluctuation. The arithmetic control module 16 can calculate a fluctuation of the wavelength dispersion compensation prism 55 based on the locus. It is to be noted that, since the incidence end face reflection image Tr1 also changes similarly the incidence end face reflection image Mr1, the fluctuation of the wavelength dispersion compensation prism 55 can be calculated even with the use of the incidence end face reflection image Tr1.

Further, as the method to the detection of the fluctuation of the wavelength dispersion compensation prism 58, the wavelength dispersion compensation prisms 55 and 58 are first integrally rotated in a state where the angular difference "Θ" = 180° is maintained. Thereby, the arithmetic control module 16 detects the fluctuations of the incidence end face reflection images Mr1, Tr1 and the fluctuations of the projection end face reflection images Mr2, Tr2 at the same time. Next, the arithmetic control module 16 solely rotates the wavelength dispersion compensation prism 58, and detects the fluctuation of the projection end face reflection image Mr2, Tr2 at this time. Subsequently, by removing the fluctuations of the incidence end face reflection images Mr1, Tr1 of the wavelength dispersion compensation prism 55 obtained earlier based on the detected fluctuations of the projection end face reflection images Mr2, Tr2, the arithmetic control module 16 enables calculating the fluctuation of the wavelength dispersion compensation prism 58. It is to be noted that the incidence end face reflection images Mr1, Tr1 and the projection end face reflection images Mr2, Tr2 can be identified by the arithmetic control module 16 via the image processor 24 based on a beam diameter or the reflection intensity with respect to the narrow-angle image pickup element 51.

In a case where the fluctuations of the wavelength dispersion compensation prisms 55 and 58 have been detected, an influence of shaft deviations of the rotating shaft 52 or an influence of face tangle errors of the wavelength dispersion compensation prisms 55 and 58 can be removed based on the detected fluctuations. Therefore, a measurement result of the surveying instrument 1 can be corrected. Further, the calculated fluctuations can be stored in the storage module 17, and the calculated fluctuations can be applied to subsequent measurements.

Further, based on a detection result of the attitude detector 18, a measurement result of the surveying instrument 1 can be converted (corrected) to three-dimensional coordinates with reference to the horizontality.

It is to be noted that, as to the rotation for the fluctuation detection of the incidence end face of the wavelength dispersion compensation prism 55 and the fluctuation detection of the projection end face of the wavelength dispersion compensation prism 58, a rotation angle of the disk prism 53 can be used as a rotation angle for the incidence end face reflection, and a rotation angle of the disk prism 54 can be used as a rotation angle for the projection end face. By using these rotation angles, the arithmetic control module 16 enables easily setting the rotation with the angular difference "Θ" of the wavelength dispersion compensation prisms 55 and 58 being maintained at approximately 180°. That is, based on the rotation angles of the disk prisms 53 and 54 when the angular difference "θ" is approximately 180°, by rotating one disk prism in the same direction by an amount which the other disk prism is rotated, the arithmetic control module 16 enables easily setting the rotation with the angular difference "Θ" being maintained at 180°.

As described above, in the first embodiment, to detect the fluctuations of the wavelength dispersion compensation prisms 55 and 58 with respect to the rotating shaft 52, that is, a shaft deviation, a face tangle error or the like based on a manufacturing error, the narrow-angle image 73 is used.

Therefore, since the narrow-angle image 73 used for the sighting or the tracking is also used for detecting fluctuations of the wavelength dispersion compensation prisms 55 and 58, a detection mechanism does not have to be additionally provided, a reduction in the number of components and a reduction in manufacturing cost can be achieved. Further, the high rigidity is not required for improving a mechanical accuracy of rotating portions, and a reduction in weight of the rotating portions can be achieved.

Further, fluctuations of the wavelength dispersion compensation prisms 55 and 58 are detected, since a measurement result can be corrected while removing an influence of the fluctuations based on a detection result, a measurement accuracy provided by the surveying instrument 1 can be improved.

Next, by referring to FIG.10A to FIG.10C, a description will be given on a second embodiment of the present invention. It is to be noted that, in FIG.10A to FIG.10C, the same components as shown in FIG.9A to FIG.9D are referred by the same symbols, and a description thereof will be omitted.

In the first embodiment, the distance measuring light 37 and the detecting light 47 enter the incidence end face portion of the wavelength dispersion compensation prism 55, which constitutes the optical axis deflector 26, coaxially with the deflection reference optical axis "O", and the light receiving optical axis 35 is also coaxial with the deflection reference optical axis "O" (see FIG.1 and FIG.2). In this case, the object reflection image reflected on the object, the incidence end face reflection images Mr1, Tr1 of the wavelength dispersion compensation prism 55, and the projection end face reflection images Mr2, Tr2 of the wavelength dispersion compensation prism 58 overlap, respectively, and each images are shown in the narrow-angle image 73. For this reason, in a case where the object is located at a distance, the receiving intensities of the reflected distance measuring light 38 (see FIG.1) and the reflected detecting light decrease, and the object reflection image is buried in the projection end face reflection image Mr2, Tr2 and the incidence end face reflection image Mr1, Tr1, and the object reflection image may not be detected.

In the second embodiment, the distance measuring light 37 and the detecting light 47 are caused to enter the wavelength dispersion compensation prism 55 with a slight tilt (for instance, approximately Ks/2 with respect to a later-described detectable range Ks) with respect to the deflection reference optical axis "O" on the incidence end face portion of the wavelength dispersion compensation prism 55. Further, the light receiving optical axis 35 is likewise tilted with respect to the deflection reference optical axis "O" in correspondence with the distance measuring light 37 and the detecting light 47.

FIG.10A to FIG.10C show a relationship between the end face reflection and the narrow-angle image 73 when the distance measuring light 37 and the detecting light 47 are caused to enter at a tilt with respect to the incidence end face of the wavelength dispersion compensation prism 55 in a state where an angular difference "Θ" of the wavelength dispersion compensation prisms 55 and 58 have become 180° (a magnification: 1). FIG.10A shows reflected lights r1, r2 of the incidence end face and the projection end face with respect to the distance measuring light 37 and the detecting light 47. FIG.10B shows the narrow-angle image 73 (a background image is omitted) at this time. It is to be noted that, in FIG.10B, an intersection of cross-hairs 74 is the deflection reference optical axis "O" on the end faces of the wavelength dispersion compensation prisms 55 and 58.

Further, in FIG.10B, "K" denotes a reflection image of an object (an object reflection image), and "Ks" denotes a range (a field angle) of the object reflection image "K" which can be detected (tracked) by the detecting light 47. It is to be noted that a size of the detectable range (the field angle) "Ks" is substantially equal to a size of an end face reflection image Tr1 (or Tr2) of the detecting light 47.

Further, FIG.10C shows a state where the end face reflection images Mr1, Mr2 of the distance measuring light 37 rotate around the rotating shaft 52 in the narrow-angle image 73. It is to be noted that the end face reflection images Tr1, Tr2 of the detecting light 47 likewise rotate around the rotating shaft 52, but the end face reflection images Tr1, Tr2 are not shown in FIG.10C.

When the distance measuring light 37 and the detecting light 47 are caused to enter with respect to the incidence end face of the wavelength dispersion compensation prism 55 at a tilt, a misalignment occurs between a light receiving position of the object reflection image "K" and light receiving positions of the incident end face reflection images Mr1, Tr1 and the projection end face reflection images Mr2, Tr2 on the narrow-angle image pickup element 51 (see FIG.1) in correspondence with a distance to the object. Therefore, the object reflection image "K" can be separated from the incidence/projection end face reflection images Mr1, Tr1, Mr2, Tr2, and the object reflection image "K" can be easily detected.

It is to be noted that, since a method for calculating fluctuations of the incidence end face reflection images Mr1, Tr1 with respect to the rotating shaft 52 and fluctuations of the projection end face reflection images Mr2, Tr2 with respect to the rotating shaft 52 is the same as a method of the first embodiment, a description thereof is omitted.

In the second embodiment, since the distance measuring light 37 and the detecting light 47 are caused to enter the wavelength dispersion compensation prism 55 at a slight tilt with respect to the rotating shaft 52, a position of the object reflection image "K" can be made different from positions of the incidence/projection end face reflection images Mr1, Tr1, Mr2, Tr2 in the narrow-angle image 73.

Therefore, even if a position of the measurement is far from the object and the intensity of a reflected light is small, since each end face reflection image does not overlap the object reflection image "K", the object reflection image "K" can be clearly detected.

It is to be noted that, in the second embodiment, both the distance measuring light 37 and the detecting light 47 are caused to enter the wavelength dispersion compensation prism 55 at a slight tilt with respect to the rotating shaft 52. On the other hand, any one of the distance measuring light 37 and the detecting light 47 may be caused to enter the wavelength dispersion compensation prism 55 at a slight tilt with respect to the rotating shaft 52.

## Claims

1. A surveying instrument comprising: a distance measuring light projecting module (11) configured to project a distance measuring light (37) along a distance measuring optical axis (39), a light receiving module (12) configured to receive a reflected distance measuring light (38), a distance measurement arithmetic module (15) configured to measure a distance to an object and the reflection intensity of said reflected distance measuring light based on a transmission signal of said distance measuring light and a light reception signal of said reflected distance measuring light, a narrow-angle image pickup module (71) configured to have a narrow-angle image pickup optical axis (44') partially shared with said distance measuring optical axis and acquire an image (73) with said distance measuring optical axis as a center, an optical axis deflector (26) configured to have two wavelength dispersion compensation prisms (55, 58) which have a same configuration and are point-symmetrically arranged in a shared portion of said distance measuring optical axis and said narrow-angle image pickup optical axis and a rotating shaft (52) orthogonal to an incident end face of one of the wavelength dispersion compensation prisms (55) and a projection end face of the other of the wavelength dispersion compensation prisms (58) and deflect said distance measuring optical axis by the rotation of said wavelength dispersion compensation prisms, a wide-angle image pickup module (14) configured to have an angle of view substantially equal to a maximum deflection range of said optical axis deflector (26), an extracting means (24) configured to extract an end face reflection image (Mr1) which is reflected light of said incidence end face of the one of the two wavelength dispersion compensation prisms and an end face reflection image (Mr2) which is reflected light of said projection end face of the other of the two wavelength dispersion compensation prisms from said image, and an arithmetic control module (16) configured to control said optical axis deflector and said distance measurement arithmetic module, calculate fluctuations of said wavelength dispersion compensation prisms based on said end face reflection images extracted by said extracting means, correct a measurement result based on said fluctuations, wherein said optical axis deflector is configured to include pair of disk prisms (53, 55) which have a common rotating shaft and motors (63, 65) which rotate and drive said disk prisms, and said wavelength dispersion compensation prisms are arranged in a central portion of said disk prisms (55a, 55b, 58a, 58b) and formed by attaching two optical prisms to each other.

2. The surveying instrument according to claim 1, further comprising a detecting light projecting module (13) configured to project a detecting light (47) for detecting said object along a detecting light optical axis (44), wherein said detecting light optical axis is partially shared with said distance measuring optical axis (39) and said narrow-angle image pickup optical axis (44'), said wavelength dispersion compensation prisms (55, 58) are arranged in a shared portion of the respective axes, and said extracting means (24) is configured to extract at least one of said distance measuring light (37) and said detecting light reflected on an end face of said wavelength dispersion compensation prisms from said image (73).

3. The surveying instrument according to claim 2, wherein at least one of said distance measuring light (37) and said detecting light (47) is configured to enter an end face of said wavelength dispersion compensation prisms (55, 58) at a tilt with respect to said rotating shaft (52).

4. The surveying instrument according to any of claims 1 to 3, further comprising an attitude detector (18) configured to detect a tilt with respect to the horizontality, wherein said arithmetic control module (16) is configured to correct the measurement result based on a detection result of said attitude detector.

5. The surveying instrument according to any one of claims 1 to 4, wherein said arithmetic control module (16) is configured to enable identifying an object reflection image reflected on said object and said end face reflection images (Mr1, Mr2) based on a reflection intensity.

## Patentansprüche

1. Vermessungsinstrument umfassend: ein Entfernungsmesslichtprojektionsmodul (11), das konfiguriert ist, um ein Entfernungsmesslicht (37) entlang einer optischen Entfernungsmessachse (39) zu projizieren, ein Lichtempfangsmodul (12), das konfiguriert ist, um ein reflektiertes Entfernungsmesslicht (38) zu empfangen, ein Entfernungsmessungs-Arithmetikmodul (15), das konfiguriert ist, um eine Entfernung zu einem Objekt und die Reflexionsintensität des reflektierten Entfernungsmesslichts auf der Grundlage eines Übertragungssignals des Entfernungsmesslichts und eines Lichtempfangssignals des reflektierten Entfernungsmesslichts zu messen, ein Schmalwinkel-Bildaufnahmemodul (71), das konfiguriert ist, um eine optische Schmalwinkel-Bildaufnahmeachse (44') aufzuweisen, die teilweise mit der optischen Entfernungsmessachse gemeinsam ist, und ein Bild (73) mit der optischen Entfernungsmessachse als Zentrum erfasst, einen optischen Achsendeflektor (26), der so konfiguriert ist, dass er zwei Wellenlängendispersionskompensationsprismen (55, 58) aufweist, die die gleiche Konfiguration aufweisen und punktsymmetrisch in einem gemeinsamen Abschnitt der optischen Achse zur Entfernungsmessung und der optischen Achse zur Aufnahme eines Schmalwinkel-Bildes angeordnet sind, und eine Drehwelle (52), die orthogonal zu einer Einfallsendfläche eines der Wellenlängendispersionskompensationsprismen (55) und einer Projektionsendfläche des anderen der Wellenlängendispersionskompensationsprismen (58) ist und die optische Achse zur Entfernungsmessung durch die Drehung der Wellenlängendispersionskompensationsprismen ablenkt, ein Weitwinkel-Bildaufnahmemodul (14), das so konfiguriert ist, um einen Blickwinkel aufzuweisen, der im Wesentlichen gleich einem maximalen Ablenkungsbereich des optischen Achsendeflektors (26) ist, ein Extraktionsmittel (24), das konfiguriert ist, um ein Endflächenreflexionsbild (Mr1, bei dem es sich um reflektiertes Licht der Einfallsendfläche des einen der beiden Wellenlängendispersionskompensationsprismen handelt, und ein Endflächenreflexionsbild (Mr2), bei dem es sich um reflektiertes Licht der Projektionsendfläche des anderen der beiden Wellenlängendispersionskompensationsprismen handelt, aus dem Bild zu extrahieren, und ein arithmetisches Steuermodul (16), das konfiguriert ist, um den optischen Achsendeflektor und das arithmetische Abstandsmessmodul zu steuern, Fluktuationen der Wellenlängendispersionskompensationsprismen auf der Grundlage der durch die Extraktionsmittel extrahierten Endflächenreflexionsbilder zu berechnen, ein Messergebnis auf der Grundlage der Fluktuationen zu korrigieren, wobei der optische Achsendeflektor so konfiguriert ist, dass er ein Paar von Scheibenprismen (53, 55) aufweist, die eine gemeinsame Drehwelle und Motoren (63, 65) aufweisen, die die Scheibenprismen drehen und antreiben, und die Wellenlängendispersionskompensationsprismen in einem zentralen Abschnitt der Scheibenprismen (55a, 55b, 58a, 58b) angeordnet und durch Anbringen von zwei optischen Prismen aneinander gebildet sind.

2. Vermessungsinstrument nach Anspruch 1, ferner umfassend ein Detektionslichtprojektionsmodul (13), das konfiguriert ist, um ein Detektionslicht (47) zum Detektieren des Objekts entlang einer optischen Achse (44) des Detektionslichts zu projizieren, wobei die optische Achse des Detektionslichts teilweise mit der optischen Entfernungsmessachse(39)und der optischen Achse (44') der Schmalwinkel-Bildaufnahme gemeinsam ist, die Wellenlängendispersionskompensationsprismen (55, 58) in einem gemeinsamen Abschnitt der jeweiligen Achsen angeordnet sind, und die Extraktionsmittel (24) konfiguriert sind, um das Abstandsmesslicht (37) und/oder das an einer Endfläche der Wellenlängendispersionskompensationsprismen reflektierte Detektionslicht aus dem Bild (73) zu extrahieren.

3. Vermessungsinstrument nach Anspruch 2, wobei mindestens eines von dem Entfernungsmesslicht (37) und dem Detektionslicht (47) konfiguriert ist, um in eine Endfläche der Wellenlängendispersionskompensationsprismen (55, 58) mit einer Neigung in Bezug auf die Drehwelle (52) einzutreten.

4. Vermessungsinstrument nach einem der Ansprüche 1 bis 3, ferner umfassend einen Lagedetektor (18), der konfiguriert ist, eine Neigung in Bezug auf die Horizontalität zu detektieren, wobei das arithmetische Steuermodul (16) konfiguriert ist, um das Messergebnis basierend auf einem Detektionsergebnis des Lagedetektors zu korrigieren.

5. Vermessungsinstrument nach einem der Ansprüche 1 bis 4, wobei das arithmetische Steuermodul (16) so konfiguriert ist, die Identifizierung eines Objektreflexionsbildes, das an dem Objekt reflektiert wird, und der Endflächenreflexionsbilder (Mr1, Mr2) auf der Grundlage einer Reflexionsintensität zu ermöglichen.

## Revendications

1. Un instrument d'arpentage comprenant un module de projection de lumière de mesure de distance (11) configuré pour projeter une lumière de mesure de distance (37) le long d'un axe optique de mesure de distance (39), un module de réception de lumière (12) configuré pour recevoir une lumière de mesure de distance réfléchie (38), un module arithmétique de mesure de distance (15) configuré pour mesurer une distance par rapport à un objet et l'intensité de réflexion de ladite lumière de mesure de distance réfléchie sur la base d'un signal de transmission de ladite lumière de mesure de distance et d'un signal de réception de lumière de ladite lumière de mesure de distance réfléchie, un module de prise de vue à angle étroit (71) configuré pour avoir un axe optique de prise de vue à angle étroit (44') partiellement partagé avec ledit axe optique de mesure de la distance et acquérir une image (73) avec ledit axe optique de mesure de la distance comme centre, un déflecteur d'axe optique (26) configuré pour avoir deux prismes de compensation de dispersion de longueur d'onde (55, 58) qui ont la même configuration et sont disposés de façon ponctuelle et symétrique dans une partie commune de l'axe optique de mesure de la distance et de l'axe optique de prise de vue à angle étroit, et un arbre rotatif (52) orthogonal à une face d'extrémité incidente de l'un des prismes de compensation de la dispersion de la longueur d'onde (55) et à une face d'extrémité de projection de l'autre des prismes de compensation de la dispersion de la longueur d'onde (58), et qui dévie l'axe optique de mesure de la distance par la rotation des prismes de compensation de la dispersion de la longueur d'onde, un module de prise de vue grand angle (14) configuré pour avoir un angle de vue sensiblement égal à une plage de déviation maximale dudit déflecteur d'axe optique (26), un moyen d'extraction (24) configuré pour extraire de ladite image une image de réflexion de la face d'extrémité (Mr1) qui est la lumière réfléchie de ladite face d'extrémité d'incidence de l'un des deux prismes de compensation de la dispersion de la longueur d'onde et une image de réflexion de la face d'extrémité (Mr2) qui est la lumière réfléchie de ladite face d'extrémité de projection de l'autre des deux prismes de compensation de la dispersion de la longueur d'onde, et un module de commande arithmétique (16) configuré pour commander ledit déflecteur de l'axe optique et ledit module arithmétique de mesure de la distance, calculer les fluctuations desdits prismes de compensation de la dispersion de la longueur d'onde sur la base desdites images de réflexion de la face d'extrémité extraites par lesdits moyens d'extraction, corriger un résultat de mesure sur la base desdites fluctuations, dans lequel ledit déflecteur de l'axe optique est configuré pour inclure une paire de prismes à disque (53, 55) qui ont un arbre rotatif commun et des moteurs (63, 65) qui tournent et entraînent lesdits prismes à disque, et lesdits prismes de compensation de dispersion de longueur d'onde sont disposés dans une partie centrale desdits prismes à disque (55a, 55b, 58a, 58b) et formés en attachant deux prismes optiques l'un à l'autre.

2. L'instrument d'arpentage selon la revendication 1, comprenant en outre un module de projection de lumière de détection (13) configuré pour projeter une lumière de détection (47) pour détecter ledit objet le long d'un axe optique de lumière de détection (44), dans lequel ledit axe optique de lumière de détection est partiellement partagé avec ledit axe optique de mesure de distance (39) et ledit axe optique de prise de vue à angle étroit (44'), lesdits prismes de compensation de dispersion de longueur d'onde (55, 58) sont disposés dans une partie partagée des axes respectifs, et ledit moyen d'extraction (24) est configuré pour extraire de ladite image (73) au moins l'une de ladite lumière de mesure de distance (37) et de ladite lumière de détection réfléchie sur une face d'extrémité desdits prismes de compensation de dispersion de longueur d'onde.

3. L'instrument d'arpentage selon la revendication 2, dans lequel au moins l'une de ces lumières de mesure de distance (37) et de détection (47) est configurée pour entrer dans une face d'extrémité de ces prismes de compensation de dispersion de longueur d'onde (55, 58) à une inclinaison par rapport à l'arbre rotatif (52).

4. L'instrument de d'arpentage selon l'une des revendications 1 à 3 comprend en outre un détecteur d'attitude (18) configuré pour détecter une inclinaison par rapport à l'horizontalité, dans lequel ledit module de commande arithmétique (16) est configuré pour corriger le résultat de la mesure sur la base d'un résultat de détection dudit détecteur d'attitude.

5. L'instrument de d'arpentage selon l'une des revendications 1 à 4, dans lequel ledit module de commande arithmétique (16) est configuré pour permettre l'identification d'une image de réflexion d'objet réfléchie sur ledit objet et lesdites images de réflexion de la face d'extrémité (Mr1, Mr2) sur la base d'une intensité de réflexion.
